(19) 

Europäisches
Patentamt
European
Patent Office
Office européen
des brevets

(11) **EP 4 447 497 A1**

(12) **EUROPEAN PATENT APPLICATION**
published in accordance with Art. 153(4) EPC

(43) Date of publication:
**16.10.2024 Bulletin 2024/42**

(21) Application number: **22919429.5**

(22) Date of filing: **13.01.2022**

(51) International Patent Classification (IPC):
***H04W 4/02*** *(2018.01)*

(52) Cooperative Patent Classification (CPC):
**H04W 4/02**

(86) International application number:
**PCT/CN2022/071860**

(87) International publication number:
**WO 2023/133766 (20.07.2023 Gazette 2023/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **HUANG, Qirui
  Shenzhen, Guangdong 518129 (CN)**
• **LIU, Yongjun
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **BEAM CONTROL METHOD AND APPARATUS**

(57)     This application discloses a beam control method and an apparatus. The method includes: obtaining a target propagation track of a beam and a reception point location of the beam, where the target propagation track passes through a transmission point location and the reception point location of the beam; determining target phase information of the beam based on the target propagation track and the reception point location, so that a depth of focus location of the beam overlaps the reception point location; and controlling to transmit the beam based on the target phase information. In embodiments of this application, when the beam is controlled to be propagated to the reception point location along the target propagation track, a focus of the beam also reaches the reception point location along the target propagation track, so that a depth of focus of the beam overlaps the reception point location. This implements strong beam focusing, and improves beam propagation efficiency.

FIG. 2A

Obtain a target propagation track of a beam and a reception point location of the beam, where the target propagation track passes through a transmission point location and the reception point location of the beam — 201

Determine target phase information of the beam based on the target propagation track and the reception point location, so that a depth of focus location of the beam overlaps the reception point location — 202

Control to transmit the beam based on the target phase information — 203

Description

TECHNICAL FIELD

This application relates to the field of electromagnetic wave technologies, and in particular, to a beam control method and an apparatus.

BACKGROUND

Conventionally, in a process of propagation of an electromagnetic wave in free space, there is a phenomenon of beam divergence. Specifically, in the process of propagation of the electromagnetic wave in the free space, a wave vector component in a vertical propagation direction causes beam diffusion, resulting in low energy focusing efficiency. A higher frequency of the electromagnetic wave indicates higher focusing efficiency, and correspondingly, a lower frequency of the electromagnetic wave indicates lower focusing efficiency. However, beam divergence cannot be avoided for an electromagnetic wave of any frequency.

Beam divergence may cause serious energy attenuation or interruption and the like, and cause low energy transmission efficiency in some application scenarios (such as wireless backhaul, wireless charging, a lidar, millimeter-wave indoor access, and a wireless local area network (wireless local area network, WLAN)). For example, turbulence, rain and fog may cause an uneven refractive index of atmosphere, and cause divergence of a propagation direction, a phase, and strength of the electromagnetic wave. This greatly reduces communication performance.

In order to resolve electromagnetic wave divergence, a beamforming technology is used in a conventional method to improve a gain of a beam in a specific direction, so as to compensate for a loss caused in propagation. However, a beamforming process requires a high requirement on the phase, and requires a strong baseband processing capability to match a phase difference between antennas. In addition, because an overall size of the antenna is large, a large quantity of antenna elements are required to obtain a narrow beam during beamforming, resulting in high costs. Further, tolerance to phase mismatch is low, performance of the antenna is poor once the phase mismatch occurs, and an implementation process is complex.

Therefore, how to enable the electromagnetic wave to more simply implement strong focusing at low costs, so as to improve communication performance by improving beam propagation efficiency is a direction worth in-depth research.

SUMMARY

Embodiments of this application provide a beam control method and an apparatus. When a beam is controlled to be propagated to a reception point location along a target propagation track, a focus of the beam also reaches the reception point location along the target propagation track, so that a depth of focus of the beam overlaps the reception point location. This implements strong beam focusing, and improves beam propagation efficiency.

According to a first aspect, a beam control method is provided, including:

obtaining a target propagation track of a beam and a reception point location of the beam, where the target propagation track passes through a transmission point location and the reception point location of the beam; determining target phase information of the beam based on the target propagation track and the reception point location, so that a depth of focus location of the beam overlaps the reception point location; and controlling to transmit the beam based on the target phase information.

In this embodiment of this application, when the beam is controlled, based on the target phase information, to be propagated to the reception point location along the target propagation track, a focus of the beam also reaches the reception point location along the target propagation track, so that a depth of focus of the beam overlaps the reception point location. This implements strong beam focusing, and improves beam propagation efficiency.

In a possible implementation, the determining target phase information of the beam based on the target propagation track and the reception point location includes:

determining initial phase information of the beam based on the target propagation track; determining a phase offset of the beam based on the reception point location and the target propagation track; and obtaining the target phase information of the beam through calculation based on the initial phase information and the phase offset.

In this embodiment of this application, the initial phase information of the beam is determined based on the target propagation track of the beam, then the phase offset of the beam is determined based on the reception point location and the target propagation track of the beam, and finally the target phase information of the beam is determined based on the initial phase information and the phase offset; and then the beam is controlled to be transmitted based on the target phase information, to achieve effect that the depth of focus location of the beam overlaps the reception location, and maximize energy of the beam at the reception point location. This implements strong beam focusing, improves beam propagation efficiency, and further improves communication performance based on beam propagation.

In a possible implementation, the determining target phase information of the beam based on the target propagation track and the reception point location includes:

determining a first transmitted wave function of the beam based on a first amplitude and first phase information of the beam at the transmission point location; obtaining second phase information through calculation based on the first transmitted wave function and the target propagation track; determining a first received wave function based on the second phase information and a second amplitude, where the second amplitude is obtained after the beam reaches the reception point location along the target propagation track; obtaining third phase information through calculation based on the first received wave function and the target propagation track; determining a second transmitted wave function of the beam based on the first amplitude and the third phase information; and when a difference between the first transmitted wave function and the second transmitted wave function falls within a first preset range, determining the third phase information as the target phase information; or when a difference between the first transmitted wave function and the second transmitted wave function exceeds a first preset range, determining a third transmitted wave function based on the third phase information and the first amplitude, obtaining fourth phase information through calculation based on the third transmitted wave function and the target propagation track, determining a second received wave function based on the third transmitted wave function, the fourth phase information, and the second amplitude, obtaining fifth phase information through calculation based on the second received wave function and the target propagation track, determining a fourth transmitted wave function of the beam based on the first amplitude and the fifth phase information, and when a difference between the third transmitted wave function and the fourth transmitted wave function falls within the first preset range, determining the fifth phase information as the target phase information.

In this embodiment of this application, the first transmitted wave function is first determined based on the first phase information and the first amplitude of the transmission point location, the corresponding second phase information and second amplitude that are obtained when the beam is propagated to the reception point location along the target propagation track are determined to determine the received wave function, the corresponding third phase information and first amplitude that are obtained when the beam is reversely propagated from the transmission point location to the reception point location along the target propagation track are determined based on the received wave function to determine the second transmitted wave function, and then the phase information of the transmission point location is adjusted based on the difference between the second transmitted wave function and the first transmitted wave function, so that when the beam is propagated along the target propagation track, energy can be balanced regardless of forward propagation or reverse propagation. In addition, because energy at the transmission point location is maximum, energy at the transmission point location as the reception point location is also maximum during reverse propagation. On the contrary, energy at the reception point location as a reception point location for forward propagation and the transmission point location for reverse propagation is also maximum. In this process, the depth of focus location of the beam overlaps the reception point location. This implements strong beam focusing, and ensures beam propagation efficiency.

In a possible implementation, the beam is a non-diffractive beam, and the method further includes:

determining an emergence angle of an electromagnetic wave based on the target propagation track, where the controlling to transmit the beam based on the target phase information includes: controlling to transmit the electromagnetic wave at the emergence angle; and controlling to modulate a phase of the electromagnetic wave based on the target phase information, so that the electromagnetic wave is converted into a non-diffractive beam, where a depth of focus location of the non-diffractive beam overlaps the reception point location.

In a possible implementation, the obtaining a target propagation track of a beam includes: obtaining an obstacle location; and determining the target propagation track based on the transmission point location, the reception point location, and the obstacle location, where the target propagation track passes through the transmission point location and the reception point location, and the target propagation track does not pass through the obstacle location.

In a possible implementation, the obtaining a target propagation track of a beam includes: determining an initial propagation track, passing through the transmission point location and the reception point location, of the beam based on the transmission point location and the reception point location; obtaining initial feedback information transmitted by a beam receiving apparatus, where the initial feedback information indicates strength information of an initial beam received at the reception point location, and the initial beam is propagated along the initial propagation track; and when a difference between the strength information of the initial beam received at the reception point location and strength information of an initial beam transmitted at the transmission point location is greater than a preset threshold, adjusting the initial propagation track to obtain the target propagation track.

In a possible implementation, the determining an initial propagation track, passing through the transmission point location and the reception point location, of the beam based on the transmission point location and the reception point location includes:

determining a reference point location based on the transmission point location and the reception point location, where a distance between the reference point location and the transmission point location is a first distance, a distance between the reference point location and the reception point location is a second distance, and a difference between the first distance and the second distance falls within a preset range; and determining the initial propagation track based on the transmission point location, the reception point location, and the reference point location, where the initial propagation track passes through the transmission point location, the reception point location, and the reference point location.

According to a second aspect, a beam transmitting apparatus is provided. The apparatus includes a control module and a phase modulation module.

The control module is configured to: obtain a target propagation track and a reception point location of a beam, where the target propagation track passes through a transmission point location of the beam and the reception point location of the beam; and determine target phase information of the beam based on the target propagation track and the reception point location, so that a depth of focus location of the beam overlaps the reception point location.

The control module is further configured to control the phase modulation module to transmit the beam based on the target phase information.

In a possible implementation, the determining target phase information of the beam based on the target propagation track and the reception point location includes: determining initial phase information of the beam based on the target propagation track; determining a phase offset of the beam based on the reception point location and the target propagation track; and obtaining the target phase information of the beam through calculation based on the initial phase information and the phase offset.

In a possible implementation, the determining target phase information of the beam based on the target propagation track and the reception point location includes: determining a first transmitted wave function of the beam based on a first amplitude and first phase information of the beam at the transmission point location; obtaining second phase information through calculation based on the first transmitted wave function and the target propagation track; determining a first received wave function based on the first transmitted wave function, the second phase information and a second amplitude, where the second amplitude is obtained after the beam reaches the reception point location along the target propagation track; obtaining third phase information through calculation based on the first received wave function and the target propagation track; determining a second transmitted wave function of the beam based on the first amplitude and the third phase information; and when a difference between the first transmitted wave function and the second transmitted wave function falls within a first preset range, determining the third phase information as the target phase information; or when a difference between the first transmitted wave function and the second transmitted wave function exceeds a first preset range, determining a third transmitted wave function based on the third phase information and the first amplitude, obtaining fourth phase information through calculation based on the third transmitted wave function and the target propagation track, determining a second received wave function based on the third transmitted wave function, the fourth phase information, and the second amplitude, obtaining fifth phase information through calculation based on the second received wave function and the target propagation track, determining a fourth transmitted wave function of the beam based on the first amplitude and the fifth phase information, and when a difference between the third transmitted wave function and the fourth transmitted wave function falls within the first preset range, determining the fifth phase information as the target phase information.

In a possible implementation, the beam is a non-diffractive beam, and the apparatus further includes a beam steering module. The control module is further configured to: determine an emergence angle of an electromagnetic wave based on the target propagation track; and control the beam steering module to transmit the electromagnetic wave at the emergence angle. In the aspect of controlling the phase modulation module to transmit the beam based on the target phase information, the control module is specifically configured to: control the beam modulation module to modulate a phase of the electromagnetic wave based on the target phase information, so that the electromagnetic wave is converted into a non-diffractive beam, where a difference between a depth of focus location of the non-diffractive beam and the reception point location falls within a first preset range.

In a possible implementation, the obtaining a target propagation track of a beam includes: obtaining an obstacle location; and determining the target propagation track based on the transmission point location, the reception point location, and the obstacle location, where the target propagation track passes through the transmission point location and the reception point location, and the target propagation track does not pass through the obstacle location.

In a possible implementation, the obtaining a target propagation track of a beam includes: determining an initial propagation track, passing through the transmission point location and the reception point location, of the beam based on the transmission point location and the reception point location; obtaining initial feedback information transmitted by a beam receiving apparatus, where the initial feedback information indicates strength information of an initial beam received at the reception point location, and the initial beam is propagated along the initial propagation track; and when a difference between the strength information of the initial beam received at the reception point location and strength information of an initial beam transmitted at the transmission point location is greater than a preset threshold, adjusting the initial propagation track to obtain the target propagation track.

In a possible implementation, the determining an initial propagation track, passing through the transmission point location and the reception point location, of the beam based on the transmission point location and the reception point location includes: determining a reference point location based on the transmission point location and the reception point location, where a distance between the reference point location and the transmission point location is a first distance, a distance between the reference point location and the reception point location is a second distance, and a difference between the first distance and the second distance falls within a preset range; and determining the initial propagation track based on the transmission point location, the reception point location, and the reference point location, where the initial propagation track passes through the transmission point location, the reception point location, and the reference point location.

According to a third aspect, an embodiment of this application provides an apparatus. The apparatus includes a communication interface and a processor. The communication interface is used by the apparatus to communication with another device, for example, to transmit and receive data or a signal. For example, the communication interface may be a transceiver, a circuit, a bus, a module, or another type of communication interface. The processor is configured to invoke a group of programs, instructions, or data to perform the method described in the first aspect. The apparatus may further include a memory, configured to store the program, the instructions, or the data invoked by the processor. The memory is coupled to the processor, and the processor may implement the method described in the first aspect when executing the instructions or the data stored in the memory.

According to a fourth aspect, an embodiment of this application further provides a communication apparatus. The communication apparatus includes a processor, a transceiver, a memory, and computer-executable instructions that are stored in the memory and that can be run on the processor. When the computer-executable instructions are run, the communication apparatus is enabled to perform the method in any one of the first aspect or the possible implementations of the first aspect.

According to a fifth aspect, an embodiment of this application further provides a computer-readable storage medium. The computer-readable storage medium stores computer-readable instructions. When the computer-readable instructions are run on a computer, the computer is enabled to perform the method in any one of the first aspect or the possible implementations of the first aspect.

According to a sixth aspect, an embodiment of this application provides a chip system. The chip system includes a processor, and may further include a memory, configured to implement the method in any one of the first aspect or the possible implementations of the first aspect. The chip system may include a chip, or may include a chip and another discrete component.

Optionally, the chip system further includes a transceiver.

According to a seventh aspect, an embodiment of this application further provides a computer program product, including instructions. When the instructions are run on a computer, the computer is enabled to perform the method in any one of the first aspect or the possible implementations of the first aspect, or perform the method in any one of the second aspect or the possible implementations of the second aspect.

## BRIEF DESCRIPTION OF DRAWINGS

To describe technical solutions in embodiments of this application or in the conventional technology more clearly, the following briefly describes accompanying drawings for describing embodiments.

FIG. 1A is a schematic diagram of an electromagnetic wave transmission scenario according to an embodiment of this application;

FIG. 1B is a diagram of a basic principle of beamforming according to an embodiment of this application;

FIG. 2A is a flowchart of a beam control method according to an embodiment of this application;

FIG. 2B is a schematic diagram of a depth of focus location of a beam according to an embodiment of this application;

FIG. 2C is a schematic diagram of a process of generating and transmitting an Airy beam according to an embodiment of this application;

FIG. 2D is a schematic diagram of a coordinate conversion process according to an embodiment of this application;

FIG. 2E is a schematic diagram in which a depth of focus of a beam changes with an emergence angle corresponding to a target propagation track according to an embodiment of this application;

FIG. 2F is a schematic diagram of adjusting a depth of focus of a beam when a linear propagation track is used according to an embodiment of this application;

FIG. 2G is a flowchart of a method for determining target phase information of a beam according to an embodiment of this application;

FIG. 2H is a schematic diagram of a process of determining target phase information of a beam according to an embodiment of this application;

FIG. 3A is a diagram of a basic principle of an intelligent reflecting surface according to an embodiment of this application;

FIG. 3B is a flowchart of a method for obtaining a target propagation track according to an embodiment of this application;

FIG. 3C is a schematic diagram of determining a reception point location of a beam according to an embodiment of this application;

FIG. 3D is a schematic diagram in which a target propagation track changes with a reception point location according to an embodiment of this application;

FIG. 3E is a schematic diagram in which a target propagation track changes with an emergence angle according to an embodiment of this application;

FIG. 4A is a flowchart of another method for obtaining a target propagation track according to an embodiment of this application;

FIG. 4B is a schematic diagram of generating an initial propagation track based on a reference point location according to an embodiment of this application;

FIG. 5 is a schematic diagram of an application scenario of a transmissive scheme according to an embodiment of this application;

FIG. 6 is a schematic diagram of an application scenario of a reflective scheme according to an embodiment of this application;

FIG. 7 is a structural block diagram of a beam transmitting apparatus according to an embodiment of this application; and

FIG. 8 is a schematic diagram of a structure of a communication apparatus according to an embodiment of this application.

## DESCRIPTION OF EMBODIMENTS

In the specification, claims, and accompanying drawings of this application, the terms "first", "second", "third", "fourth" and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or modules is not limited to the listed steps or modules, but optionally further includes an unlisted step or module, or optionally further includes another inherent step or module of the process, the method, the system, the product, or the device.

An "embodiment" mentioned in this specification means that a particular feature, structure, or characteristic described with reference to this embodiment may be included in at least one embodiment of this application. The phrase shown at various locations in the specification may not necessarily mean a same embodiment, and is not an independent or alternative embodiment exclusive from another embodiment. It is explicitly and implicitly understood by a person skilled in the art that embodiments described in this specification may be combined with another embodiment.

"A plurality of" means two or more than two. The term "and/or" describes an association relationship for describing associated objects and indicates that three relationships may exist. For example, A and/or B may indicate the following three cases: Only A exists, both A and B exist, and only B exists. The character "/" usually indicates an "or" relationship between the associated objects.

The following describes the technical solutions in embodiments of this application with reference to the accompanying drawings in embodiments of this application.

Terms that may be used in embodiments of this application are first described.

Beamforming is also referred to as beamforming or spatial filtering, and is a signal processing technology in which signals are directionally transmitted and received by using a sensor array. In the beamforming technology, a parameter of a basic unit of a phase array is adjusted, so that signals at some angles obtain constructive interference, and signals at some other angles obtain destructive interference, to improve a gain of a beam in a specific direction and compensate for a loss caused by an obstacle or non-line-of-sight propagation.

An intelligent reflecting surface is a plane including a large quantity of passive reflective elements, which is disposed between a transmitter and a receiver. Because each element can independently change a phase (or/and) amplitude of an incident signal, the intelligent reflecting surface can be used, so that the receiver can better receive a signal transmitted by the transmitter.

A non-diffractive beam is an electromagnetic wave that does not diverge in a propagation direction and has a self-recovery characteristic. The non-diffractive beam is essentially a solution of a free space wave equation in different coordinate systems. Common non-diffractive beams include a Bessel beam, an Airy beam, a Mathieu beam, and a Weber beam. In terms of a propagation track, the Bessel beam has a straight-line propagation track, and the Airy beam, the Mathieu beam, and the Weber beam each have a curved propagation track. Because the non-diffractive beam has a non-transmitting characteristic, this type of beam has a strong focusing property. A curved non-diffractive beam further has a specific capability of bypassing an obstacle. A curvature radius of a beam propagation track can be changed by properly adjusting a beam parameter (for example, a beam waist radius, beam energy, a phase, and an antenna aperture), so as to bypass the obstacle.

A depth of focus is briefly referred to as a focus depth, and is a depth of a focus (a location at which energy is most concentrated) of light after the light passes through a lens. Because the light is also an electromagnetic wave, a beam formed after the electromagnetic wave is transmitted through an antenna also has a depth of focus. For a Gaussian beam, an image formed at a non-focus location is uneven in definition.

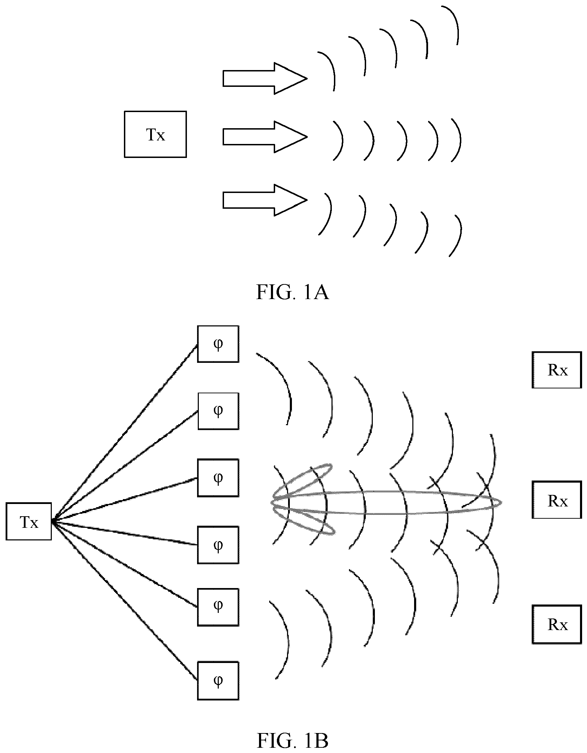

An embodiment of this application provides an electromagnetic wave transmission scenario. For details, refer to FIG. 1A. FIG. 1A is a schematic diagram of an electromagnetic wave transmission scenario according to an embodiment of this application. As shown in FIG. 1A, a transmission source transmits an electromagnetic wave at a transmitter (Transmitter, Tx), and a formed beam is usually a Gaussian beam (a beam whose distribution of light field strength in a cross section meets Gaussian distribution). In a process of transmitting the electromagnetic wave to a receiver (Receiver, Rx), beam diffusion exists. Beam diffusion means that when the electromagnetic wave is propagated in free space, a wave vector component in a vertical propagation direction causes beam diffusion, resulting in low energy focusing efficiency.

In a conventional method, beam diffusion may be resolved through beamforming. A principle of beamforming is shown in FIG. 1B. FIG. 1B is a diagram of a basic principle of beamforming according to an embodiment of this application. At the transmitter, a phase and an amplitude of each transmit unit are controlled, to obtain a required constructive interference mode and destructive interference mode from a transmitted signal wave array. At the receiver, signals received by different receivers are combined in a proper manner, to obtain a received signal. Amplitudes and phases (weights) of signals transmitted by different antenna elements are adjusted, so that propagation paths of the signals are different. This can implement control on a main lobe direction. Generally, a larger quantity of antenna elements in beamforming indicates a narrower beam and a stronger beam focusing capability.

However, beamforming has the following disadvantages: (1) Beamforming has a high requirement on a phase, and requires a strong baseband processing capability to match a phase difference between antennas, resulting in high costs. (2) Tolerance to phase mismatch is low, and focusing performance is poor once the phase mismatch occurs. (3) Generally, because an overall size of an antenna is large, a large quantity of antenna elements are required in beamforming to obtain a narrow beam, which also increases deployment costs.

It can be learned from the foregoing description that, although the method has a specific processing solution for scattering of the electromagnetic wave during propagation in the free space, additional problems such as a complex operation, high costs, a difficulty in implementation, increased delay, and increased signal interference and signal fading are caused.

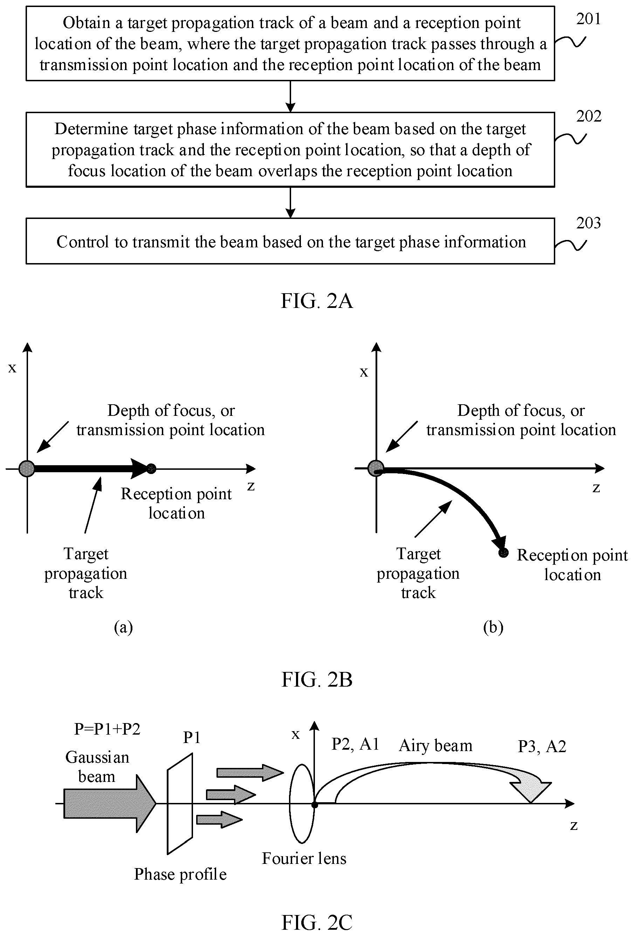

Based on this, refer to FIG. 2A. FIG. 2A is a flowchart of a beam control method according to an embodiment of this application. As shown in FIG. 2A, the method includes the following steps.

201: Obtain a target propagation track of a beam and a reception point location of the beam, where the target propagation track passes through a transmission point location and the reception point location of the beam.

The beam in this embodiment of this application refers to a shape formed by propagation of an electromagnetic wave in free space.

It can be learned from the description in the foregoing process that beam aggregation can be implemented through beamforming. However, this manner of transmitting the beam by adjusting a parameter of a basic unit of a phase array causes additional problems such as high costs and a difficulty in implementation described above. However, in this embodiment of this application, the beam can be freely propagated in free space, and then a propagation track corresponding to the beam is obtained.

The target propagation track of the beam is a path through which the beam passes in an entire process of transmitting the beam from the transmission point location and receiving the beam at the reception point location. The target propagation track may be a straight-line track. For example, if the electromagnetic wave is usually propagated in a straight line, the target propagation track is a straight-line track. Alternatively, in some cases, the target propagation track may be a curve track. For example, for an Airy beam, a Mathieu beam, and a Weber beam in non-diffractive beams, all target propagation tracks are curved propagation tracks. When the target propagation track is a straight-line track, the target propagation track is a determined propagation track. When the target propagation track is a curve track, there may be a plurality of possibilities for the target propagation track. In this case, the target propagation track may be a preset propagation track, or may be a propagation track formed after random initialization of a parameter, and then the propagation track is obtained through measurement and/or calculation.

202: Determine target phase information of the beam based on the target propagation track and the reception point location, so that a depth of focus location of the beam overlaps the reception point location.

203: Control to transmit the beam based on the target phase information.

The depth of focus location of the beam is essentially a location at which beam energy is maximum. Usually, when the beam is propagated in the free space along a preset propagation track, because a diffusion phenomenon always exists, the depth of focus location of the beam is the transmission point location of the beam. For details, refer to FIG. 2B. FIG. 2B is a schematic diagram of the depth of focus location of the beam according to this embodiment of this application. As shown in (a) in FIG. 2B, an x-z coordinate system is built by using the transmission point location of the beam as an origin, a forward propagation direction of the beam as a z axis, and a straight line perpendicular to the z axis as an x axis. When the target propagation track is a straight line, the target propagation track starts from the origin and extends forward to the z axis, the depth of focus location of the beam overlaps the transmission point location of the beam. Similarly, as shown in (b) in FIG. 2B, when the target propagation track is a curve, the depth of focus location of the beam also overlaps the transmission point location of the beam.

To maximize the energy of the beam when the beam is propagated to the reception location, the depth of focus location of the beam needs to overlap with the reception point location of the beam. The overlap herein may be complete overlap, or may be that an existing difference is less than a preset range. The preset range may be, for example, within 30% of an energy maximum value, to be specific, when the energy at the reception point location of the beam reaches more than 70% of the maximum value, it may be considered that the depth of focus location overlaps the reception point location. Determining the target phase information of the beam based on the target propagation track and the reception point location includes two meanings: (1) The beam can always be propagated along the target propagation track based on the target phase information. (2) When the beam reaches the reception point location, the energy of the beam can reach the maximum based on the target phase information. The propagation track of the beam is related to a beam type. For example, when the beam is a beam transmitted in a straight line, and the target propagation track is a straight line between the transmission point location and the reception point location. In this case, the beam needs to be transmitted at the transmission point location towards the reception point location along a direction that forms an angle of 0° with a horizontal plane. It is assumed that the beam is a beam that is propagated in a curve, the target propagation track of the beam is related to a bending factor (which determines a bending degree of the beam) corresponding to the beam type. For example, for the Airy beam, in a same propagation medium, for a beam with a same wavelength, a bending factor of the Airy beam is fixed, a transmitted electromagnetic wave is converted into an Airy beam, and a corresponding phase profile for value assignment is fixed. An additional phase is used to make the beam have same energy when the beam reaches the reception point location and the transmission point location. For details, refer to FIG. 2C. FIG. 2C is a schematic diagram of a process of generating and transmitting the Airy beam according to this embodiment of this application. As shown in FIG. 2C, target phase information P=P1+P2, where P1 is used to convert an electromagnetic wave into a beam of a target type, and P2 is used to generate $\varphi 1$ based on an amplitude A1 at the transmission point location, so that $\varphi 2$ is generated based on a phase P3 corresponding to the beam at the reception point location and an amplitude A2, where $\varphi 1 = \varphi 2$. Because the amplitude is a property parameter of the beam, and phase distribution is a parameter other than the property parameter of the beam, beam energy adjustment may be implemented by adjusting phase distribution of the beam without changing a property of the beam.

It can be learned that in this embodiment of this application, when the beam is controlled, based on the target phase information, to be propagated to the reception point location along the target propagation track, a focus of the beam also reaches the reception point location along the target propagation track, so that the depth of focus of the beam overlaps the reception point location. This implements strong beam focusing, and improves beam propagation efficiency.

Optionally, determining the target phase information of the beam based on the target propagation track and the reception point location includes: determining initial phase information of the beam based on the target propagation track; determining a phase offset of the beam based on the reception point location and the target propagation track; and obtaining the target phase information of the beam through calculation based on the initial phase information and the phase offset.

Generally, beams of different types respectively have corresponding wave functions, and each are propagated according to a rule defined by the wave function in a propagation process. The wave function includes an amplitude and a phase, which indicates that different beam energy is related to the beam amplitude and the beam phase. In addition, a target propagation track corresponding to the wave function may be obtained by solving the wave function, that is, it indicates that the target propagation track is also related to phase information.

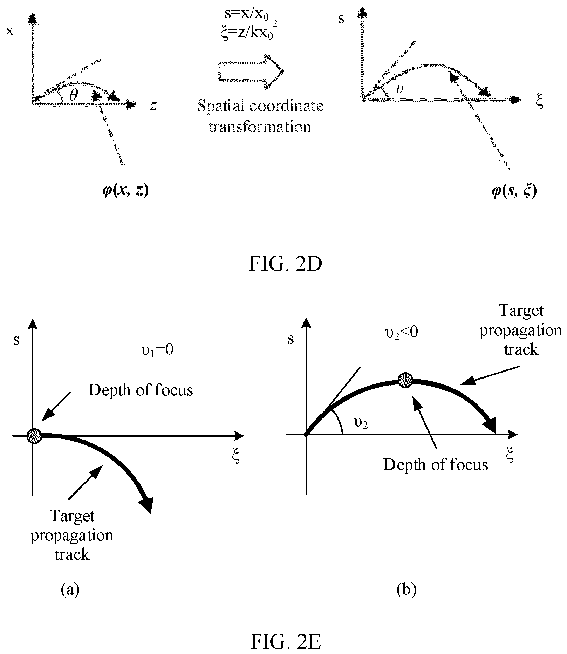

In this embodiment of this application, a wave function of the Airy beam is used as an example for description. First, to facilitate expression of a wave function of the target propagation track, the target propagation track is first transformed from an x-z coordinate plane to an $s$-$\xi$ coordinate plane. For details, refer to FIG. 2D. FIG. 2D is a schematic diagram of a coordinate conversion process according to this embodiment of this application. As shown in FIG. 2D, a correspondence between the x-z coordinate plane, the $s$-$\xi$ coordinate plane, and a coordinate axis is $s = x/x_0$ and $\xi = z/kx_0^2$, where $x_0$ is a dimensionless scale unit, and k is a wave vector ($k = 2\pi/\lambda$). In addition, an example in which the beam with the curve track in this embodiment of this application is an Airy beam is used for description. In the $s$-$\xi$ plane, the emergent Airy beam may be expressed as follows:

$$(s, = 0) = (s) \cdot exp(as) \cdot exp(ivs) \qquad (1)$$

$a$ indicates a truncation factor, $v$ indicates an included angle between an incident beam and a $\xi$ axis, () indicates an Airy function, $i$ in $exp(ivs)$ indicates an imaginary part function, the function corresponds to the phase, and $A_i(s) \cdot exp(as)$

corresponds to the amplitude. The emergent Airy beam is substituted into the wave equation to obtain a solution, where the wave equation is:

$$i\partial\varphi/\partial\xi+(\partial^2\varphi)/(2\partial s^2)=0 \tag{2}$$

A propagation track equation $s=v\xi+(\xi/2)^2$ (3) of the beam is obtained through calculation. Then a propagation track equation in the x-z coordinate plane may be obtained through inverse transformation: $x=\theta z+[z^2/(4k^2 x_0{}^3)]$ (4), where $\theta$ indicates an included angle between the beam and the z axis, namely, an emergence angle of the Airy beam.

According to the formula (3), in the s-$\xi$ coordinate plane, if it is assumed $v=0$, $s=(\xi/2)^2$ and $\xi=0$, to be specific, the beam passes through the $\xi$ axis at the origin. That is, if it is assumed that the reception point location is on the $\xi$ axis, the Airy beam cannot reach the reception point location along the target propagation track. When $v\neq0$, a value of $s=0$ includes $\xi=0$ and $\xi=-4v$. To be specific, if the beam needs to be propagated to the reception point location along a curve track, $v\neq0$. In addition, because $\xi>0$, $v<0$, which means that an included angle between the beam and the $\xi$ axis is opposite to an included angle between a target propagation track direction and the $\xi$ axis. For details, refer to FIG. 2E. FIG. 2E is a schematic diagram in which the depth of focus of the beam changes when a curve propagation track is used according to this embodiment of this application. As shown in (a) in FIG. 2E, when the target propagation track is transmitted in parallel, a corresponding emergence angle is $v_1=0$. When the target propagation track is transmitted upward, as shown in (b) in FIG. 2E, a corresponding emergence angle is $v_2<0$. In this case, the Airy beam can reach the reception point location on the $\xi$ axis along the target propagation track.

Due to a change of $v$, the depth of focus of the beam can move, but the focal depth does not overlap the reception point location (because the focal depth corresponds to the reception point location only when $\xi=-4v$), and the energy at the reception point location cannot reach a maximum value.

Therefore, a phase offset value $\underline{u}$ may be set, so that the depth of focus location further shifts. In this case, the wave function of the Airy beam may be expressed as follows:

$$\varphi(s,\xi) = C \cdot f(s,\xi) \cdot A_i[s - (\xi/2)^2 - v\xi + ia(\xi - 2v + 2u)] \cdot exp(ius) \tag{5}$$

$C = exp(-av^2 - au^2 + i2a^2u - i2a^2v + 2auv)$ and $f(s,\xi) = exp\left[as + \frac{is\xi}{2} + \left(-\frac{iu^2}{2} + \frac{ia^2}{2} - 2au + av\right)\xi + \left(-\frac{a}{2} - \frac{iu}{2}\right)\xi^2 - i\xi^3/12\right]$. When an imaginary part in the $A_i()$ Airy function is 0, that is, $\xi - 2v + 2u = 0$, the amplitude of the beam is set to a maximum value, that is, the depth of focus of the beam is $\xi = 2(v - u)$. Therefore, in a case in which $\xi$ indicates the reception point location, the depth of focus location overlaps the reception point location when phase offset $u=v - \xi/2$.

It can be learned from the foregoing description process that, when a target propagation track of the Airy beam is obtained, a parameter in the corresponding wave function of the Airy beam can be obtained through reverse deduction, that is, corresponding initial phase information is determined; then, a value of the emergence angle $v$ corresponding to the target propagation track can be determined based on the target propagation track, and the phase offset can be obtained through calculation based on the reception point location $\xi$; and finally, the target phase information of the beam can be obtained through calculation based on the initial phase information and the phase offset.

It should be noted that, when the target propagation track of the beam is obtained, the beam may also be transmitted along the target propagation track. In this case, specific initial phase information may not be obtained, and only an additional phase offset needs to be added on the basis of implementing the target propagation track, so that the target phase information of the beam is obtained based on the initial phase information and the phase offset.

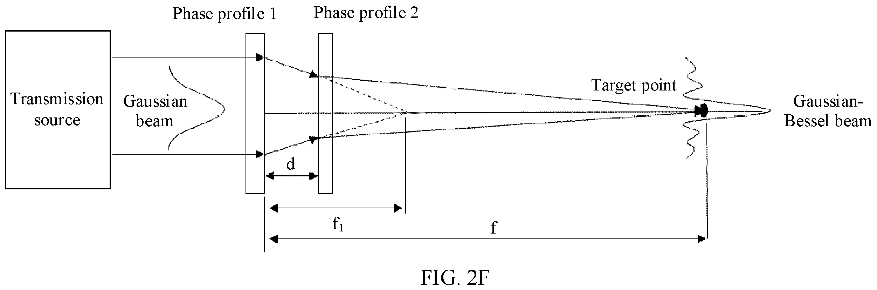

The foregoing process describes a process in which when the target propagation track is a curve track, the depth of focus location of the beam overlaps the reception point location based on the target phase information, or when the target propagation track of the beam is a straight-line propagation track, the depth of focus location may also overlap the reception point location based on the target phase information. For details, refer to FIG. 2F. FIG. 2F is a schematic diagram of adjusting the depth of focus of the beam when the linear propagation track is used according to this embodiment of this application. As shown in FIG. 2F, an example in which the target propagation track is a Gaussian-Bessel beam (a straight-line non-diffractive beam) is used. As shown in FIG. 2F, after an input Gaussian beam is shaped by using a first phase profile (namely, a phase profile 1 in the figure, which may be a spatial light modulator), a Gaussian-Bessel non-diffractive beam may be generated, and a corresponding wave function of the Gaussian-Bessel non-diffractive beam is:

$$E(r,z) = J_0(k_r \cdot r) \cdot E_0 \cdot w_0/w(z) \cdot exp(-r/w^2(z)) \qquad (6)$$

*r* indicates a radial coordinate, z indicates an axial coordinate, $E_0$ indicates an initial amplitude of the Gaussian beam, $J_0()$ indicates a zero-order Bessel function, $k_r$ indicates a radial component of the wave vector, $w_0$ indicates a beam waist radius, and *w(z)* indicates a radius of the beam.

It is assumed that a depth of focus of the generated Gaussian-Bessel beam is $f_1$, and phase distribution of the first phase profile is:

$$\varphi_1(x, y) = -\pi r^2/(\lambda f_1) \qquad (7)$$

When it is the straight-line propagation track, a distance between a transmission point and a reception point is a focal length *f*. To implement that the depth of focus location of the beam overlaps a target point, a second phase profile (namely, a phase profile 2 in FIG. 2F) may be used to apply phase distribution to the Gaussian-Bessel beam again. Therefore, it may be assumed that a depth of focus of the second phase profile is $f_2$, $f_2 = f(f_1 - d)/(f_1 - f)$, where *d* is a distance between the first phase profile and the second phase profile. Phase distribution of the second phase profile may be obtained based on the following relationship:

$$\varphi_2(x, y) = -\pi r^2/(\lambda f_2) \qquad (8)$$

*x, y* are coordinates of each pixel in the second phase profile, and $\lambda$ is a wavelength of the beam.

It can be learned that in this embodiment of this application, the initial phase information of the beam is determined based on the target propagation track of the beam, then the phase offset of the beam is determined based on the reception point location and the target propagation track of the beam, and finally the target phase information of the beam is determined based on the initial phase information and the phase offset; and then the beam is controlled to be transmitted based on the target phase information, to achieve effect that the depth of focus location of the beam overlaps the reception location, and maximize energy of the beam at the reception point location. This implements strong beam focusing, improves beam propagation efficiency, and further improves communication performance based on beam propagation.

For the straight-line propagation track, distribution of the first phase profile and the second phase profile may be obtained through deduction according to, for example, the foregoing formulas (6), (7), and (8), and a combination value of the first phase profile and the second phase profile is the target phase information.

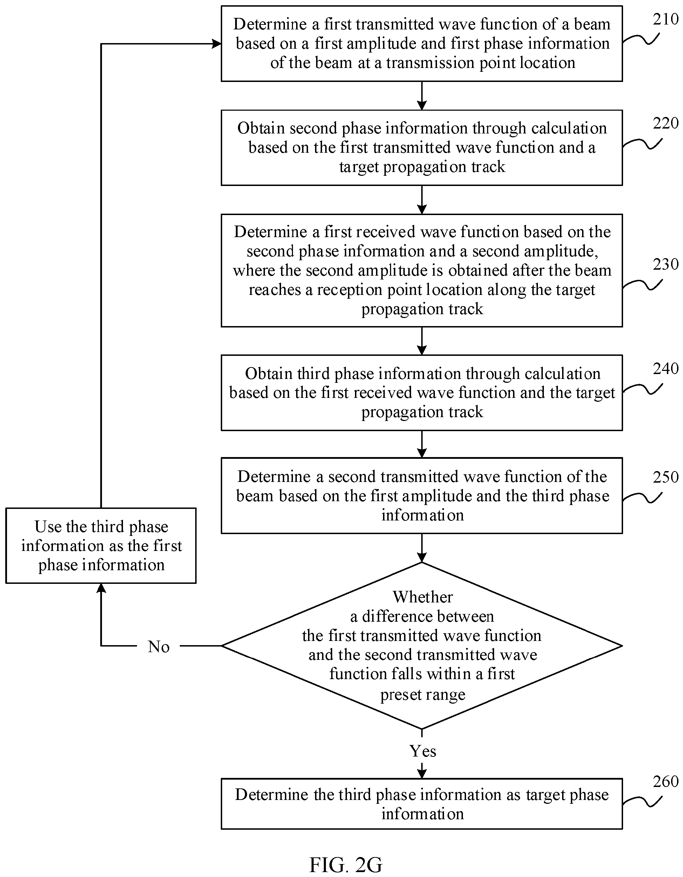

For the curve propagation track, in addition to obtaining the target phase information through deduction according to the foregoing formulas (1) to (5), on the other hand, the depth of focus location of the beam overlaps the reception point location, which also means that energy values of the beam at the transmission point location and the reception point location are the same (or that energy values are slightly different and almost the same), and an energy loss in the propagation process is extremely small. Therefore, for determining the target phase information of the beam based on the target propagation track and the reception point location, further refer to FIG. 2G. FIG. 2G is a flowchart of a method for determining the target phase information of the beam according to this embodiment of this application. The method specifically includes the following steps.

210: Determine a first transmitted wave function of the beam based on a first amplitude and first phase information of the beam at the transmission point location.

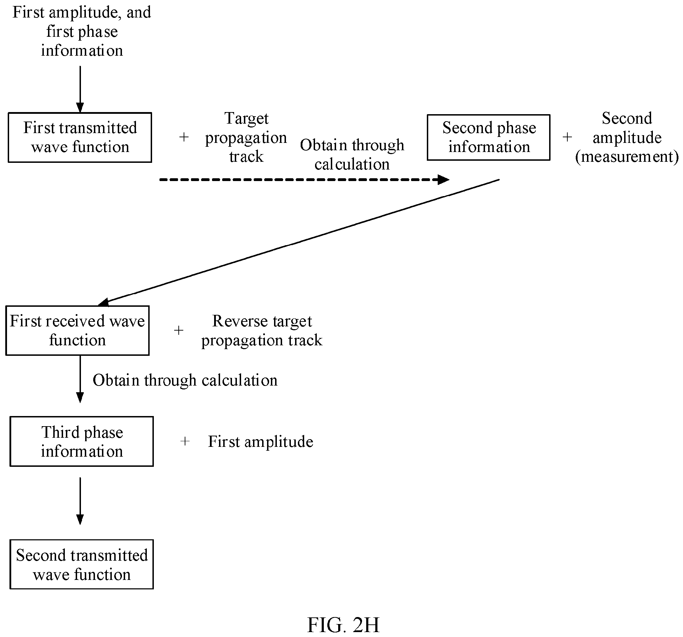

In this embodiment of this application, determining the target phase information is a process of iterative adjustment and repeated game playing between a transmitter and a receiver. For details, refer to FIG. 2H. FIG. 2H is a schematic diagram of a process of determining the target phase information of the beam according to this embodiment of this application. As shown in FIG. 2H, one beam is first transmitted at the transmission point location of the beam. An amplitude of the beam is the first amplitude. The first amplitude may be a measured value obtained through measurement of a sensor, or may be a preset value. Similarly, the first phase information may be assigned with a randomly initialized value, or may be a value obtained through phase modulation that is performed to enable the beam to be propagated along the target propagation track. It can be learned from the foregoing formula (1) that the wave function of the beam is related to the amplitude and the phase information of the beam. Therefore, a wave function of the beam at the transmission point location may be determined based on the corresponding first amplitude and first phase information of the beam, namely, the first transmitted wave function.

220: Obtain second phase information through calculation based on the first transmitted wave function and the target propagation track.

The second phase information is phase information of the reception point location. It can be learned from the foregoing step description that the target propagation track may be a preset propagation track, or may be a propagation track obtained by randomly initializing the amplitude and/or the phase information. After the target propagation track is determined, an equation (where *v* is a known term) of the target propagation track in the foregoing formula (3) may be obtained. In this case, the first transmitted wave function is substituted into the target propagation track, to obtain the corresponding second phase information obtained when the beam is propagated to the reception point location along the preset propagation track.

230: Determine a first received wave function based on the second phase information and a second amplitude, where the second amplitude is obtained after the beam reaches the reception point location along the target propagation track.

It can be learned from the description of the foregoing process that the second phase information is possible corresponding phase information obtained after the beam corresponding to the first transmitted wave function reaches the reception point location along the target propagation track. Usually, because a related parameter changes when the beam is propagated in the free space, there is a difference between the second phase information and the first phase information. In addition, the first amplitude at the transmission point location is not entirely the same as the second amplitude at the reception point location, and the second amplitude may be obtained through measurement.

The first received wave function, namely, a corresponding wave function of the beam at the reception point location may be built based on the second phase information and the second amplitude, this process may be completed by a processor at the reception point location, and then the first received wave function is transmitted to the reception point location. Alternatively, the second amplitude obtained through measurement may be transmitted by the reception point location to a processor at the transmission point location based on feedback information, and then the processor at the transmission point location builds the first received wave function.

240: Obtain third phase information through calculation based on the first received wave function and the target propagation track.

Similar to the description in step 220, the first received wave function is substituted into a reverse target propagation track to obtain a solution, so as to obtain the third phase information. A meaning of the process is that phase information corresponding to the beam is obtained after the beam is reversely propagated from the reception point location to the transmission point location along the target propagation track. In a case of stable beam propagation, forward propagation or reverse propagation is performed along the target propagation track, and energy at a same location point does not change. For the transmission point location, the corresponding third phase information obtained when the beam is received is the same as (or infinitely close to) the corresponding first phase information obtained when the beam is transmitted.

250: Determine a second transmitted wave function of the beam based on the first amplitude and the third phase information.

The second transmitted wave function may be built based on the third phase information obtained through calculation and the first amplitude.

260: When a difference between the first transmitted wave function and the second transmitted wave function falls within a first preset range, determine the third phase information as the target phase information.

As described above, the third phase information is obtained through calculation when the beam is reversely propagated from the reception point location to the transmission point location along the target propagation track. The second transmitted wave function built based on the third phase information and the first amplitude needs to be the same as (or infinitely close to) the first transmitted wave function in the case of stable beam propagation. Therefore, the first transmitted wave function is compared with the second transmitted wave function (for example, energy values | $\varphi$ |, amplitudes, or phases corresponding to the first transmitted wave function and the second transmitted wave function are compared). When the difference between the first transmitted wave function and the second transmitted wave function falls within the first preset range, it indicates that the beam propagation process is stable, and it may be determined that the third phase information is corresponding target phase information obtained when the beam is transmitted from the transmission point. The first preset range may be that the difference between the first transmitted wave function and the second transmitted wave function falls within a range of 10% of a value determined based on a transmitted wave function. It should be noted that the first phase information may also be the target phase information. However, because the first phase information is randomly assigned phase information, a measurement process is difficult; and the third phase information may be directly obtained through calculation. Therefore, the third phase information may be used as the target phase information.

When the difference between the first transmitted wave function and the second transmitted wave function exceeds the first preset range, the third phase information may be used as the first phase information, and then steps 210 to 260 are repeated to obtain a new first transmitted wave function and a new second transmitted wave function. When it is determined that a difference between the new first transmitted wave function and the new second transmitted wave function falls within the first preset range, third phase information corresponding to the new second transmitted wave function is determined as the target phase information.

Alternatively, when the difference between the first transmitted wave function and the second transmitted wave function exceeds the first preset range, the step of repeating steps 210 to 260 may also be described as follows: determining a third transmitted wave function based on the third phase information and the first amplitude; obtaining fourth phase information through calculation based on the third transmitted wave function and the target propagation track; determining a second received wave function based on the third transmitted wave function, the fourth phase information, and the second amplitude; obtaining fifth phase information through calculation based on the second received wave function and the target propagation track; determining a fourth transmitted wave function of the beam based on the first amplitude and the fifth phase information; and when a difference between the third transmitted wave function and the fourth transmitted wave function falls within the first preset range, determining the fifth phase information as the target phase information.

When the difference between the first transmitted wave function and the second transmitted wave function falls within the first preset range, it indicates that forward propagation and reverse propagation of the beam along the target propagation track tend to be stable (that is, in a process of forward propagation and reverse propagation, energy values are the same at a same location on the target propagation track). During reverse propagation, the corresponding transmission point location is the corresponding reception point location during forward propagation, and energy reaches a maximum value, that is, energy at the reception point location during forward propagation of the beam reaches a maximum value. This implements that the depth of focus location of the beam overlaps the reception point location of the beam.

It can be learned that in this embodiment of this application, the first transmitted wave function is first determined based on the first phase information and the first amplitude of the transmission point location, the corresponding second phase information and second amplitude that are obtained when the beam is propagated to the reception point location along the target propagation track are determined to determine the received wave function, the corresponding third phase information and first amplitude that are obtained when the beam is reversely propagated from the transmission point location to the reception point location along the target propagation track are determined based on the received wave function to determine the second transmitted wave function, and then the phase information of the transmission point location is adjusted based on the difference between the second transmitted wave function and the first transmitted wave function, so that when the beam is propagated along the target propagation track, energy can be balanced regardless of forward propagation or reverse propagation. In addition, because the energy at the transmission point location is maximum, energy at the transmission point location as the reception point location is also maximum during reverse propagation. On the contrary, energy at the reception point location as a reception point location for forward propagation and the transmission point location for reverse propagation is also maximum. In this process, the depth of focus location of the beam overlaps the reception point location. This implements strong beam focusing, and ensures beam propagation efficiency.

In the foregoing process, the method in which the beam reaches the reception point location along the target propagation track, and the depth of focus overlaps the reception point location is described. However, in the beam propagation process, an obstacle may be encountered during propagation. As a result, the beam cannot reach the reception point location along an originally designed target propagation track.

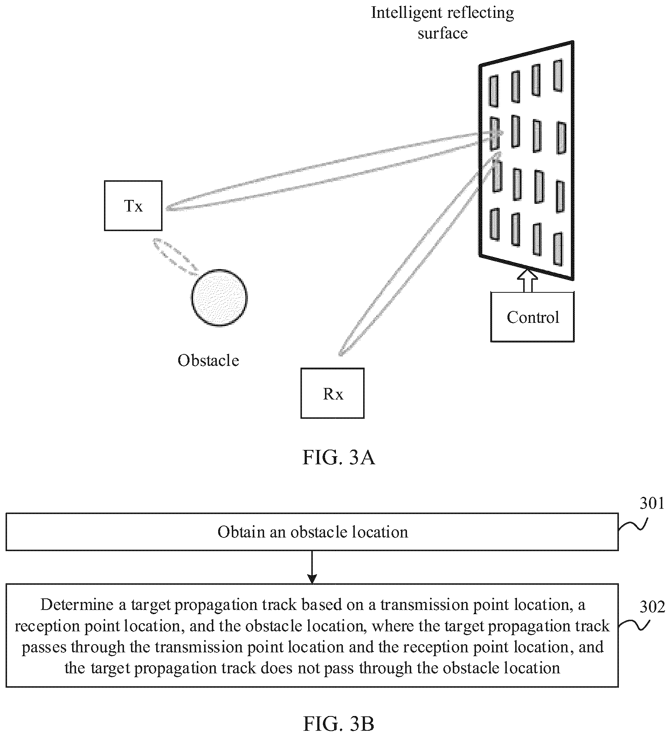

In a conventional method, a method for changing a propagation track of a beam includes an intelligent reflecting surface method. For details, refer to FIG. 3A. FIG. 3A is a diagram of a basic principle of an intelligent reflecting surface according to an embodiment of this application. As shown in FIG. 3A, reflection characteristics (such as a phase, a frequency, an amplitude, and a polarization direction) of a large quantity of passive antennas on the reflecting surface are controlled by using software or hardware, to actively modify a radio channel and provide a new spatial degree of freedom for a system, so as to change a propagation path of an electromagnetic wave. In this way, an obstacle can be bypassed and radio link performance can be enhanced. The intelligent reflecting surface includes a large quantity of electromagnetic reflective elements that can be independently deployed to generate an additional phase shift caused by signal reflection. Therefore, an intelligent reflecting surface technology can actively control a propagation characteristic of a signal, which facilitates signal reception. In terms of a structure, the intelligent reflecting surface can be considered as a large-scale passive antenna array. Therefore, the intelligent reflecting surface has lower power consumption, higher efficiency, and higher reliability that a conventional wireless communication device.

However, the intelligent reflecting surface has the following disadvantages: (1) Deployment is limited by an environment. The intelligent reflecting surface needs to be deployed in an electromagnetic environment. In practice, most outdoor environments are complex and cannot meet deployment conditions (such as a river and a private house). In addition, in an indoor environment, most indoor users do not have electromagnetic theory knowledge, which limits deployment of the intelligent reflecting surface to some extent. (2) Due to the introduction of the intelligent reflecting surface, an extra path is added between a transmitter and the receiver, and a longer delay is required for signal propagation. (3) The intelligent reflecting surface increases multipath effect to some extent, resulting in signal interference and fading. (4) Control software and an algorithm are complex.

When the propagation track of the beam is a curve track, for example, an Airy beam, it can be learned according to the formula (4) in the foregoing embodiment that a propagation track equation of the beam includes three parameters:

$\theta$, $k$, and $x_0$. The target propagation track of the beam can be changed by adjusting the three parameters. Based on this premise, refer to FIG. 3B. FIG. 3B is a flowchart of a method for obtaining the target propagation track according to an embodiment of this application. As shown in FIG. 3B, the method includes the following steps.

301: Obtain an obstacle location.

302: Determine the target propagation track based on a transmission point location, a reception point location, and the obstacle location, where the target propagation track passes through the transmission point location and the reception point location, and the target propagation track does not pass through the obstacle location.

In this embodiment of this application, the Airy beam is also used as an example for description. In this embodiment of this application, an obstacle with a determined location is included, and the obstacle location may be indicated by coordinates in an x-z coordinate plane. Similarly, the transmission point location and the reception point location may also be indicated by the coordinates in the x-z coordinate plane. Because a propagation track equation of the Airy beam is $x=\theta z+[z^2/(4k^2x_0{}^3)]$, it may be learned that the Airy beam inevitably passes through (0, 0). The location usually corresponds to the transmission point location of the beam, and the reception point location is any coordinate in the *x-z* coordinate plane.

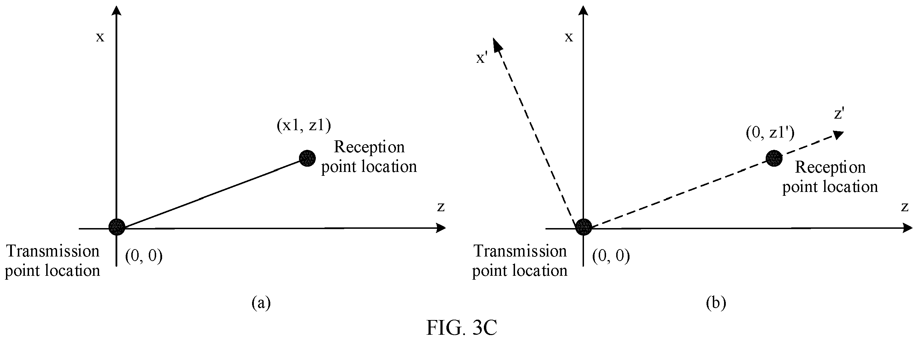

Optionally, to facilitate recording of coordinates of each point, a coordinate system may be rebuilt based on a straight line in which the transmission point location and the reception point location are located. For details, refer to FIG. 3C. FIG. 3C is a schematic diagram of determining the reception point location of the beam according to an embodiment of this application. As shown in (a) in FIG. 3C, in the x-z coordinate plane, the transmission point location may be a coordinate origin (0, 0), and the reception point location is (x1, z1). As shown in (b) in FIG. 3C, the original *x-z* coordinate plane may be converted into an x'-z' coordinate system, where the x'-z' coordinate system is generated by using the straight line in which the transmission point location and the reception point location are located as a z' axis, a straight line perpendicular to z' as an x' axis, and the transmission point location as the coordinate origin. In this case, it may be learned that coordinates of the transmission point location are (0, 0), and coordinates of the reception point location are (0, z1').

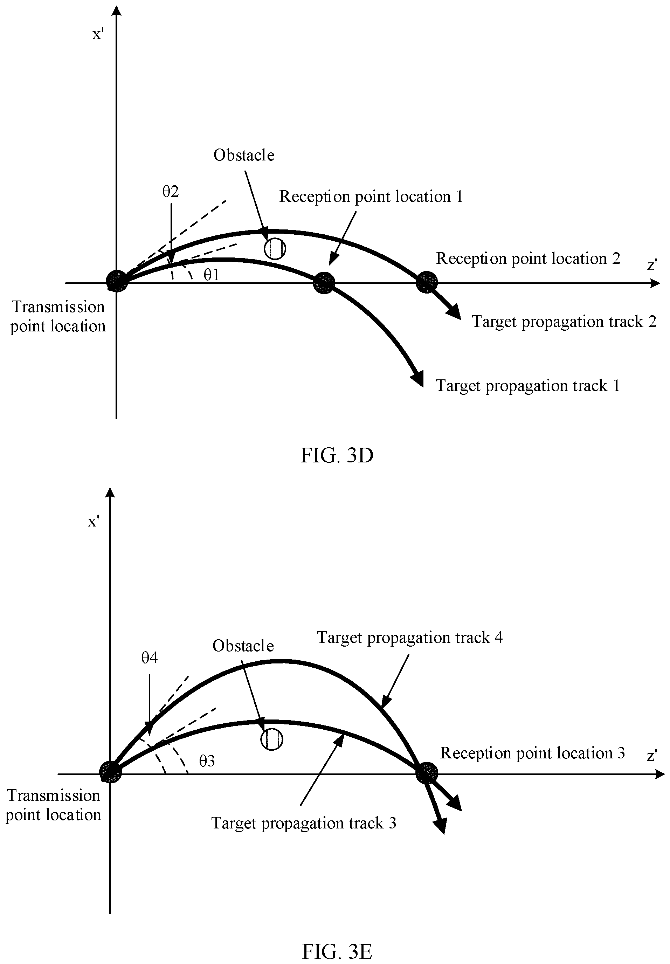

Then, after the coordinates are transformed, all reception point locations are on the z' axis. In a case in which both $k$ and $x_0$ are determined values (for transmitted beams, only emergence angles are different, and other parameters are the same), the target propagation track changes with the change of the reception point location. For details, refer to FIG. 3D. FIG. 3D is a schematic diagram in which the target propagation track changes with the reception point location according to an embodiment of this application. As shown in FIG. 3D, it is assumed that a reception point location (0, z2') indicates a reception point location 1. This value is substituted into the propagation track equation to obtain $\theta 1$ through calculation. It is assumed that a reception point location (0, z3') indicates a reception point location 2. This value is substituted into the propagation track equation to obtain $\theta 2$ through calculation, where $\theta 2 > \theta 1$ (an angle direction is not involved). That is, when the transmission point location and the reception point location are determined, the emergence angle $\theta$ is a determined value, and the target propagation track is also a determined track equation.

It is assumed that the obstacle location is (x4', z4'), and the obstacle location is substituted into a track equation corresponding to the target propagation track to obtain a solution. If the track equation is not met, it indicates that the obstacle does not pass through the target propagation track, and it is determined that the beam may be propagated along the target propagation track. If the obstacle location is substituted into the track equation corresponding to the target propagation track to obtain the solution and the track equation is not met, it indicates that the obstacle passes through the target propagation track. In this case, a new target propagation track may be obtained by changing either the transmission point location or the reception point location, and the emergence angle $\theta$ of the beam also changes in this process. Alternatively, a new target propagation track may be obtained by changing both the transmission point location and the reception point location, and the emergence angle $\theta$ of the beam may change, or may not change in this process. In the foregoing process, the obstacle may not pass through the new target propagation track, and the beam is propagated to the reception point location by bypassing the obstacle. This avoids impact of the obstacle on beam propagation. This process of determining the target propagation track may also be applied to a scenario in which the emergence angle $\theta$ of the beam is specified but the reception point location is not specified. The reception point location is finally determined based on the target propagation track equation and a value of $\theta$. That is, in this case, when the transmission point location of the beam is determined, the target propagation track is a determined track provided that either the reception point location or the emergence angle of the beam is a determined value.

In another case, when $k$ and/or $x_0$ are/is not determined values/a determined value (for example, beams with different wavelengths are transmitted for a plurality of times), the emergence angles $\theta$ of the beams also change with $k$ and/or $x_0$ when transmission point locations and reception point locations of the beams are the same. For details, refer to FIG. 3E. FIG. 3E is a schematic diagram in which the target propagation track changes with the emergence angle according to an embodiment of this application. As shown in FIG. 3E, when the transmission point location and the reception point location of the beam are determined, there are a plurality of unknown parameters ($\theta$, $k$, and/or $x_0$) in the target propagation track corresponding to the beam. Therefore, the beam may further correspond to a target propagation track 3, a target propagation track 4, and the like shown in the figure. These different target propagation tracks correspond to different emergence angles, for example, $\theta 3$ and $\theta 4$.

In this embodiment of this application, the target propagation track passes through the transmission point location and the reception point location, and does not pass through the obstacle location. In this case, a reference point may be obtained. The reference point is close to the obstacle location, and the reference point and the obstacle location do not pass through a same curve track. For example, the obstacle location is (x4', z4'), and the reference point location is (x4', z5'), that is, the reference point and the obstacle have a same x' axis value but have different z' axis values; or the reference point location is (x5', z4'), that is, the reference point and the obstacle have different x' axis values but have a same z' axis value. Then, a value of the reference point is substituted into the propagation track equation of the beam to obtain a solution, and the emergence angle $\theta$ of the beam and values/a value of $k$ and/or $x_0$ are/is determined, to determine the target propagation track. The target propagation track meets a requirement that the target propagation track passes through the transmission point location and the reception point location and does not pass through the obstacle location.

It can be learned that in this embodiment of this application, when the obstacle location is obtained, it is assumed that the beam is a beam with a known characteristic (both $k$ and $x_0$ are determined values). The target propagation track of the beam may be determined based on the transmission point location and the reception point location through which the target propagation track of the beam needs to pass, and whether the target propagation track bypasses the obstacle is determined. When the target propagation track does not bypass the obstacle, the reception point location of the beam may be changed by changing the emergence angle of the beam, so that the target propagation track bypasses the specified obstacle location. Alternatively, it is assumed that the beam is a beam with an unknown characteristic ($k$ and/or $x_0$ are/is undetermined values/an undetermined value), the target propagation track may be obtained through calculation based on the transmission point location, the reception point location, and the reference location of the beam. Different reference point locations correspond to different emergence angles of the beams and different $k$ and/or $x_0$. In this case, the target propagation track can bypass the obstacle by changing the emergence angle of the beam, $k$, and/or $x_0$.

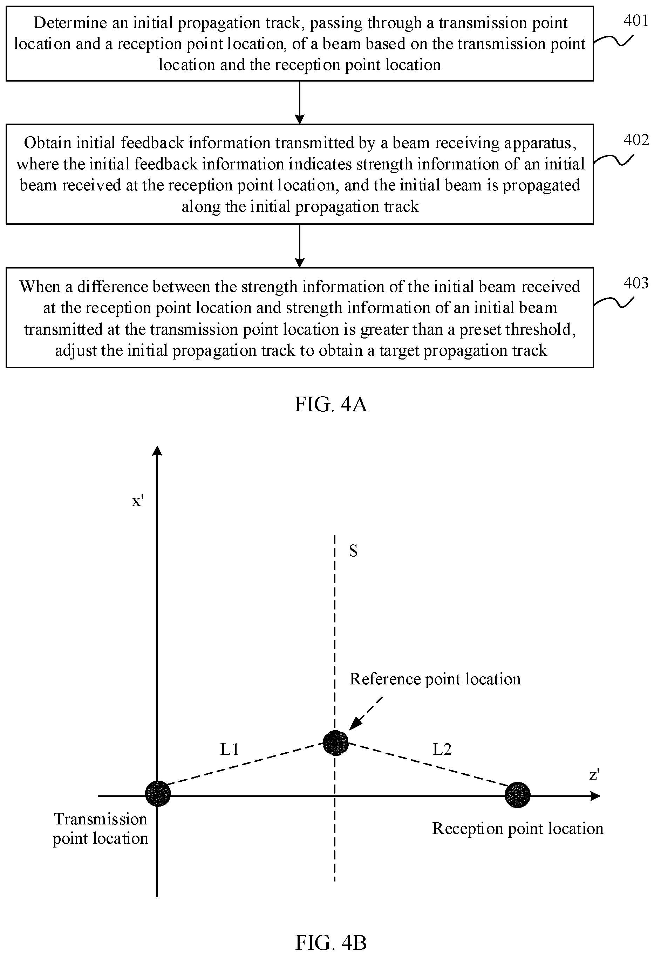

Alternatively, FIG. 4A is a flowchart of another method for obtaining a target propagation track according to an embodiment of this application. As shown in FIG. 4A, the method includes the following steps.

401: Determine an initial propagation track, passing through a transmission point location and a reception point location, of a beam based on the transmission point location and the reception point location.

402: Obtain initial feedback information transmitted by a beam receiving apparatus, where the initial feedback information indicates strength information of an initial beam received at the reception point location, and the initial beam is propagated along the initial propagation track.

403: When a difference between the strength information of the initial beam received at the reception point location and strength information of an initial beam transmitted at the transmission point location is greater than a preset threshold, adjust the initial propagation track to obtain the target propagation track.

In this embodiment of this application, there is an obstacle with unknown coordinates between the transmission point and the reception point. Therefore, the initial propagation track of the beam is first determined. The initial propagation track passes through the transmission point location and the reception point location. The reception point location may be a determined location, and an emergence angle of the beam is a determined value. Alternatively, the reception point location is an undetermined location, and an emergence angle of the beam is a randomly assigned value. In this case, the initial propagation track is also a track determined based on the randomly assigned emergence angle of the beam.

After receiving the beam transmitted at the transmission point location, the reception point location may transmit feedback information to the transmission point location. It is assumed that the reception point location is a determined location. The feedback information may include the strength information of the initial beam received at the reception point location, namely, corresponding beam strength information obtained after the beam is propagated to the reception point location along the initial propagation track. Then, the strength information of the initial beam received at the reception point location is compared with the strength information of the initial beam transmitted at the transmission point location. It is assumed that a difference between the two is greater than a preset threshold. It indicates that the beam may encounter an obstacle when transmitted along the initial propagation track, resulting in beam transmission. In this case, the initial propagation track needs to be adjusted, and then strength information of a beam received at the reception point location is obtained, and is compared with the strength information of the beam transmitted at the transmission point location, until it is determined that a difference between the two is less than a preset threshold. It indicates that the beam does not encounter an obstacle in a beam propagation process, or bypasses the obstacle. The propagation track may be used as the target propagation track. The preset threshold may be 30%, or another value less than 30%.

It can be learned that in this embodiment of this application, when an obstacle location is not obtained, the beam may be first transmitted along the initial propagation track, and then whether the beam encounters the obstacle in a process of propagation along the initial propagation track is determined based on the feedback information from the reception point location. If the beam encounters the obstacle, the initial propagation track is adjusted (which may be specifically implemented by adjusting the emergence angle of the beam), to obtain the target propagation track. The target propagation track can bypass the obstacle, thereby ensuring propagation efficiency of the beam.

Optionally, determining the initial propagation track, passing through the transmission point location and the reception point location, of the beam based on the transmission point location and the reception point location includes: determining a reference point location based on the transmission point location and the reception point location, where a distance between the reference point location and the transmission point location is a first distance, a distance between the reference point location and the reception point location is a second distance, and a difference between the first distance and the second distance falls within a preset range; and determining the initial propagation track based on the transmission point location, the reception point location, and the reference point location, where the initial propagation track passes through the transmission point location, the reception point location, and the reference point location.

Specifically, when the transmission point location and the reception point location are obtained, but the obstacle location is not obtained, and values of an emergence angle $\theta$, $k$, and/or $x_0$ in a beam track equation are unknown, one reference point location may be obtained, and the initial propagation track is determined based on the transmission point location, the reception point location, and the reference point location. For details, refer to FIG. 4B. FIG. 4B is a schematic diagram of generating the initial propagation track based on the reference point location according to this embodiment of this application. As shown in FIG. 4B, the reference point location is on a midline S between the transmission point location and the reception point location, and a difference between a distance L1 between the transmission point location and the reference point location and a distance L2 between the reception point location and the reference point location falls within the preset range. The preset range is a minimum value, to be specific, L1=L2, or L1 is infinitely close to L2.

In this embodiment of this application, the initial propagation track can be more accurately determined based on the reference point location, the transmission point location, and the reception point location, to ensure that the initial propagation track is a parabola with a maximum amplitude between the transmission point location and the reception point location. This helps the beam bypass the obstacle when propagated along the propagation track, thereby implementing efficient beam propagation.

The embodiment corresponding to FIG. 2A to FIG. 2H describes the process in which the beam is propagated along the target propagation track, so that the beam is focused at the reception point location. The embodiment corresponding to FIG. 3A to FIG. 3E describes the process in which the target propagation track of the beam is determined based on the known obstacle location. The embodiment corresponding to FIG. 4A and FIG. 4B describes the process in which the target propagation track of the beam is determined based on the unknown obstacle location. The foregoing three embodiments may be separately implemented, or may be implemented in combination. For example, the target propagation track is first determined according to the method in the embodiments corresponding to FIG. 3A to FIG. 3E and/or FIG. 4A and FIG. 4B, then the beam is propagated to the reception point location along the target propagation track, and the beam is focused at the reception point location according to the method in the embodiment corresponding to FIG. 2A to FIG. 2H (in other words, the depth of focus location of the beam overlaps the reception point location).

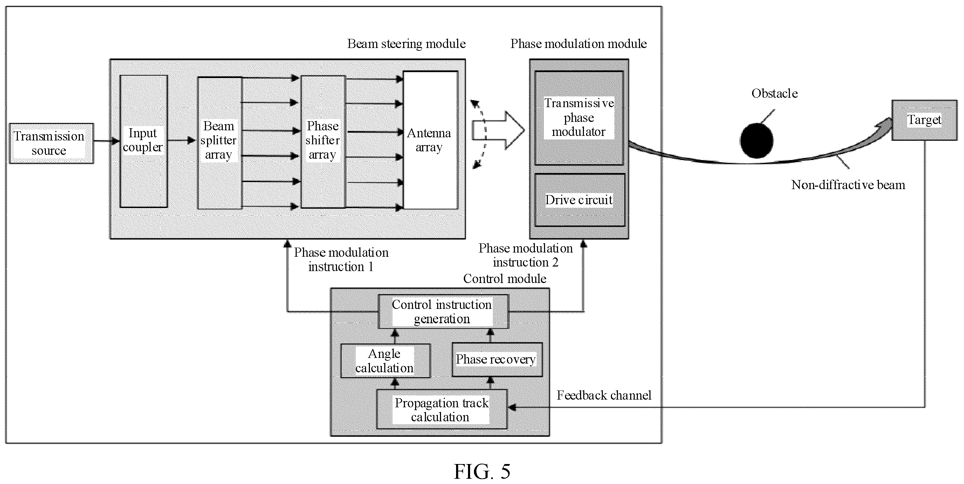

For a specific application scenario corresponding to the foregoing process, refer to FIG. 5. FIG. 5 is a schematic diagram of an application scenario of a transmissive scheme according to an embodiment of this application. As shown in FIG. 5, an electromagnetic wave transmitted from a transmission source may be specifically a microwave, a millimeter wave, terahertz, light, or the like. A beam steering module is configured to control steering of an electromagnetic wave to form a phase difference, so as to change a propagation track of the electromagnetic wave, so that the electromagnetic wave is transmitted along a target propagation track. The beam steering module may be specifically a phased array antenna, an optical phase array, a spatial light modulator, or the like. A phase modulation module is configured to perform phase modulation on the electromagnetic wave, and a depth of focus location of a beam can overlap a reception point location (a target location). The phase modulation module may be specifically a tunable metasurface, a spatial light modulator, a non-linear medium, or the like. The control module determines an emergence angle of the beam, and then generates a phase modulation instruction 1, to control the beam steering module to implement beam transmission at the emergence angle, so as to implement beam propagation along the target propagation track. In addition, the control module determines target phase information, and generates a phase modulation instruction 2, to control the phase modulation module to modulate a phase of the beam based on the target phase information, so that the depth of focus location of the beam can overlap the reception point location. The electromagnetic wave may be transmitted after being processed by the beam steering module, or the beam steering module and the phase modulation module, and the transmitted beam is a bendable beam, which may be specifically an Airy beam, a Mathieu beam, a Weber beam, or the like in non-diffractive beams.

In addition, a feedback channel may be further included, and is configured to transmit feedback information to the control module, so that the control module determines whether the beam passes through an obstacle in a transmission process, and then the control module adjusts the propagation track of the beam to bypass the obstacle.

A specific method implementation procedure in this scenario includes the following steps.

(1) After being coupled into the beam steering module, a signal from the transmission source is split into a plurality of same sub-signals. After each sub-signal is shifted in phase, a specific phase difference is generated between adjacent sub-signals, and then the sub-signals are transmitted to an antenna array for transmission and form a beam.

(2) The control module receives the feedback information (a target point location, beam strength information, and the like) transmitted by a target point (namely, the reception point location described above) through the feedback channel, calculates the propagation track, converts the propagation track into a phase modulation instruction, and then transmits the phase modulation instruction to the beam steering module and the phase modulation module.

(3) The control module adjusts a phase shifter array in the beam steering module to control the phase difference between the adjacent sub-signals, so as to change a beam direction. In addition, after recovering phase distribution, the control module transmits another group of phase modulation instructions to a drive circuit of the phase modulation module, to drive a phase modulator to work, perform spatial phase modulation on an incident beam, change a propagation track of the incident beam to bypass the obstacle, and move the depth of focus to a target.

In this scenario, the phase modulation module is a transmissive phase modulator, can achieve good effect when a bending angle of the non-diffractive beam does not need to be large, and can reduce complexity of a phase recovery algorithm and control deployment costs.

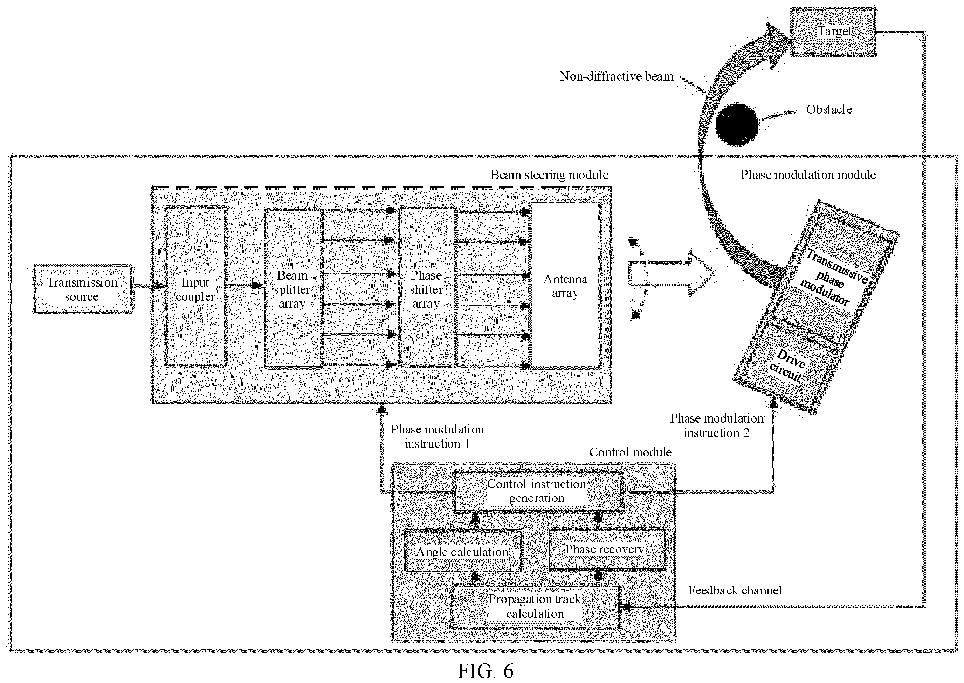

Alternatively, for a specific application scenario corresponding to the foregoing process, refer to FIG. 6. FIG. 6 is a schematic diagram of an application scenario of a reflective scheme according to an embodiment of this application. As shown in FIG. 6, a phase modulation module is a reflective phase modulator. A specific processing procedure in this scenario is similar to the procedure described in FIG. 5. A difference lies in that the phase modulation module uses the reflective phase modulator (for example, a reflective tunable metasurface) to implement phase modulation.

In addition, because an emergence angle corresponding to a beam transmitted from a beam steering module is $\theta_1$, and an emergence angle corresponding to a beam reflected by the reflective phase modulator is $\theta_2$, a transmissive phase modulator causes an additional phase shift, and this needs to be taken into account when a phase recovery-related operation is performed.

In this scenario, the phase modulation module is a reflective phase modulator, and can achieve good effect when a large bending angle of a non-diffractive beam is needed, and has a smaller loss, higher energy efficiency, and a wider application scope.

The scenario in the foregoing embodiment may be specifically applied to scenarios such as wireless charging, unmanned aerial vehicle control, laser detection, wireless backhaul, millimeter-wave indoor access, and a high-speed wireless local area network of a terminal device. The terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

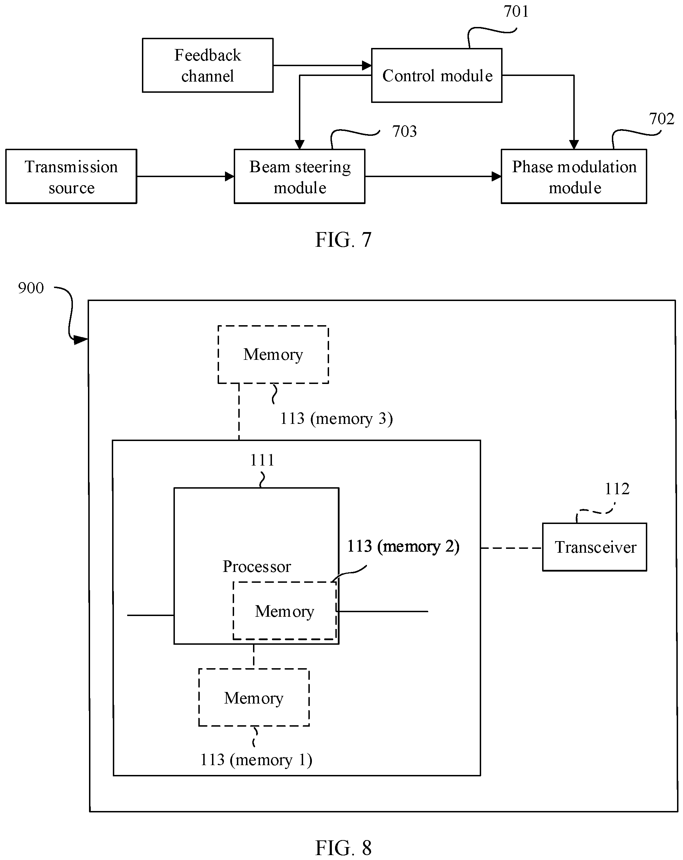

FIG. 7 shows a beam transmitting apparatus according to an embodiment of this application. The beam transmitting apparatus may be configured to perform the methods and specific embodiments in FIG. 2A to FIG. 2H, FIG. 3A to FIG. 3E, and FIG. 4A and FIG. 4B. In a possible implementation, as shown in FIG. 7, the apparatus includes a control module 701 and a phase modulation module 702.

The control module 701 is configured to: obtain a target propagation track and a reception point location of a beam, where the target propagation track passes through a transmission point location of the beam and the reception point location of the beam; and determine target phase information of the beam based on the target propagation track and the reception point location, so that a depth of focus location of the beam overlaps the reception point location.

The control module 701 is further configured to control the phase modulation module 702 to transmit the beam based on the target phase information.

Optionally, determining the target phase information of the beam based on the target propagation track and the reception point location includes:
determining initial phase information of the beam based on the target propagation track; determining a phase offset of the beam based on the reception point location and the target propagation track; and obtaining the target phase information of the beam through calculation based on the initial phase information and the phase offset.

Optionally, determining the target phase information of the beam based on the target propagation track and the reception point location includes: determining a first transmitted wave function of the beam based on a first amplitude and first phase information of the beam at the transmission point location; obtaining second phase information through calculation based on the first transmitted wave function and the target propagation track; determining a first received wave function based on the first transmitted wave function, the second phase information and a second amplitude, where the second amplitude is obtained after the beam reaches the reception point location along the target propagation track; obtaining third phase information through calculation based on the first received wave function and the target propagation track; determining a second transmitted wave function of the beam based on the first amplitude and the third phase information; and when a difference between the first transmitted wave function and the second transmitted wave function falls within a first preset range, determining the third phase information as the target phase information; or when a difference between the first transmitted wave function and the second transmitted wave function exceeds a first preset range, determining a third transmitted wave function based on the third phase information and the first amplitude, obtaining fourth phase information through calculation based on the third transmitted wave function and the target propagation track, determining a second received wave function based on the third transmitted wave function, the fourth phase information, and the second amplitude, obtaining fifth phase information through calculation based on the second received wave function and the target propagation track, determining a fourth transmitted wave function of the beam based on the first amplitude and the fifth phase information, and when a difference between the third transmitted wave function and the fourth transmitted wave function falls within the first preset range, determining the fifth phase information as the target phase information.

Optionally, the beam is a non-diffractive beam. The apparatus further includes a beam steering module 703. The control module 701 is further configured to:

determine an emergence angle of an electromagnetic wave based on the target propagation track; and control the beam steering module 703 to transmit the electromagnetic wave at the emergence angle. In the aspect of controlling the phase modulation module 702 to transmit the beam based on the target phase information, the control module is specifically configured to: control the beam modulation module to modulate a phase of the electromagnetic wave based on the target phase information, so that the electromagnetic wave is converted into a non-diffractive beam, where a difference between a depth of focus location of the non-diffractive beam and the reception point location falls within a first preset range.

Optionally, obtaining the target propagation track of the beam includes: obtaining an obstacle location; and determining the target propagation track based on the transmission point location, the reception point location, and the obstacle location, where the target propagation track passes through the transmission point location and the reception point location, and the target propagation track does not pass through the obstacle location.

Optionally, obtaining the target propagation track of the beam includes: determining an initial propagation track, passing through the transmission point location and the reception point location, of the beam based on the transmission point location and the reception point location; obtaining initial feedback information transmitted by a beam receiving apparatus, where the initial feedback information indicates strength information of an initial beam received at the reception point location, and the initial beam is propagated along the initial propagation track; and when a difference between the strength information of the initial beam received at the reception point location and strength information of an initial beam transmitted at the transmission point location is greater than a preset threshold, adjusting the initial propagation track to obtain the target propagation track.

Optionally, determining the initial propagation track, passing through the transmission point location and the reception point location, of the beam based on the transmission point location and the reception point location includes: determining a reference point location based on the transmission point location and the reception point location, where a distance between the reference point location and the transmission point location is a first distance, a distance between the reference point location and the reception point location is a second distance, and a difference between the first distance and the second distance falls within a preset range; and determining the initial propagation track based on the transmission point location, the reception point location, and the reference point location, where the initial propagation track passes through the transmission point location, the reception point location, and the reference point location.

Optionally, the control module 701 may be a chip, an encoder, an encoding circuit, or another integrated circuit that can implement the method in this application.

Optionally, the beam transmitting apparatus may further include a transceiver module (not shown in the figure). The transceiver module may be an interface circuit or a transceiver function. The transceiver module may be coupled to the control module 701, and is configured to communicate with another apparatus and receive and transmit data.

Optionally, the beam transmitting apparatus may further include a storage module (not shown in the figure). The storage module may be configured to store data and/or signaling. The storage module may be coupled to the control module 701. The control module 701 is configured to read the data and/or signaling in the storage module, so that the beam control method in the foregoing method embodiment is performed.

FIG. 8 is a schematic diagram of a structure of a communication apparatus according to an embodiment of this application. For a structure of the communication apparatus, refer to the structure shown in FIG. 8. The communication apparatus 900 includes a processor 111 and a transceiver 112. The processor 111 is electrically coupled to the transceiver 112.

The processor 111 is configured to execute some or all of computer program instructions in a memory, and when the some or all of the computer program instructions are executed, the apparatus is enabled to perform the method in any one of the foregoing embodiments.

The transceiver 112 is configured to communicate with another device.

Optionally, the apparatus further includes the memory 113, configured to store the computer program instructions. Optionally, the memory 113 (a memory 1) is located in the apparatus, the memory 113 (a memory 2) is integrated with the processor 111, or the memory 113 (a memory 3) is located outside the apparatus.

It should be understood that the communication apparatus 900 shown in FIG. 8 may be a chip or a circuit, for example, a chip or a circuit that may be disposed in a terminal apparatus or the communication apparatus. Alternatively, the transceiver 112 may be a communication interface. The transceiver includes a receiver and a transmitter. Further, the communication apparatus 900 may include a bus system.

The processor 111, the memory 113, and the transceiver 112 are connected through the bus system. The processor 111 is configured to execute the instructions stored in the memory 113, to control the transceiver to receive a signal and transmit a signal, to complete the steps of a first device or a second device in the implementation method in this application. The memory 113 may be integrated into the processor 111, or may be disposed separately from the processor 111.

In an implementation, it may be considered that functions of the transceiver 112 are implemented by using a transceiver circuit or a dedicated transceiver chip. It may be considered that the processor 111 is implemented by using a dedicated processing chip, a processing circuit, a processor, or a general-purpose chip. The processor may be a central processing unit (central processing unit, CPU), a network processor (network processor, NP), or a combination of the CPU and the NP. The processor may further include a hardware chip or another general-purpose processor. The foregoing hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL) and another programmable logic device, a discrete gate or a transistor logic device, a discrete hardware component, or any combination thereof. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (Random Access Memory, RAM), and is used as an external cache. By way of example but not limitative description, many forms of RAMs may be used, for example, a static random access memory (Static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (Enhanced SDRAM, ESDRAM), a synchlink dynamic random access memory (synchlink DRAM, SLDRAM), and a direct rambus random access memory (direct rambus RAM, DR RAM). It is to be noted that the memory described in this application aims to include but is not limited to these memories and any memory of another proper type.

An embodiment of this application provides a computer-readable storage medium that stores a computer program. The computer program is used to perform the beam control method in the foregoing embodiment.

An embodiment of this application provides a computer program product including instructions. When the computer program product runs on a computer, the computer is enabled to perform the beam control method in the foregoing embodiment.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraints of technical solutions. A person skilled in the art may use different methods to implement the described functions for each particular application, but it should not be considered that this implementation goes beyond the scope of this application.

It may be clearly understood by a person skilled in the art that, for the purpose of convenient and brief description, for a detailed operating process of the foregoing system, apparatus, and module, refer to a corresponding process in the foregoing method embodiments, and details are not described herein again.

In the several embodiments provided in this application, it should be understood that the disclosed system, apparatus, and method may be implemented in another manner. For example, the described apparatus embodiment is merely an example. For example, division into the modules is merely logical function division. There may be another division manner during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical modules, may be located at one location, or may be distributed on a plurality of network modules. Some or all of the modules may be selected based on actual needs to achieve the objectives of the solutions of embodiments.

In addition, functional modules in embodiments of this application may be integrated into one processing module, or each of the modules may exist alone physically, or two or more modules are integrated into one module.

When the functions are implemented in a form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A beam control method, wherein the method comprises:

   obtaining a target propagation track of a beam and a reception point location of the beam, wherein the target propagation track passes through a transmission point location and the reception point location of the beam;
   determining target phase information of the beam based on the target propagation track and the reception point location, so that a depth of focus location of the beam overlaps the reception point location; and
   controlling to transmit the beam based on the target phase information.

2. The method according to claim 1, wherein the determining target phase information of the beam based on the target propagation track and the reception point location comprises:

   determining initial phase information of the beam based on the target propagation track;
   determining a phase offset of the beam based on the reception point location and the target propagation track; and
   obtaining the target phase information of the beam through calculation based on the initial phase information and the phase offset.

3. The method according to claim 1 or 2, wherein the beam is a non-diffractive beam, and the method further comprises:

   determining an emergence angle of an electromagnetic wave based on the target propagation track; and
   the controlling to transmit the beam based on the target phase information comprises:

      controlling to transmit the electromagnetic wave at the emergence angle; and
      controlling to modulate a phase of the electromagnetic wave based on the target phase information, so that the electromagnetic wave is converted into a non-diffractive beam, wherein a depth of focus location of the non-diffractive beam overlaps the reception point location.

4. The method according to any one of claims 1 to 3, wherein the obtaining a target propagation track of a beam comprises:

   obtaining an obstacle location; and
   determining the target propagation track based on the transmission point location, the reception point location, and the obstacle location, wherein the target propagation track passes through the transmission point location and the reception point location, and the target propagation track does not pass through the obstacle location.

5. The method according to any one of claims 1 to 3, wherein the obtaining a target propagation track of a beam comprises: determining an initial propagation track, passing through the transmission point location and the reception point location, of the beam based on the transmission point location and the reception point location;

obtaining initial feedback information transmitted by a beam receiving apparatus, wherein the initial feedback information indicates strength information of an initial beam received at the reception point location, and the initial beam is propagated along the initial propagation track; and

when a difference between the strength information of the initial beam received at the reception point location and strength information of an initial beam transmitted at the transmission point location is greater than a preset threshold, adjusting the initial propagation track to obtain the target propagation track.

6. The method according to claim 5, wherein the determining an initial propagation track, passing through the transmission point location and the reception point location, of the beam based on the transmission point location and the reception point location comprises:

determining a reference point location based on the transmission point location and the reception point location, wherein a distance between the reference point location and the transmission point location is a first distance, a distance between the reference point location and the reception point location is a second distance, and a difference between the first distance and the second distance falls within a preset range; and

determining the initial propagation track based on the transmission point location, the reception point location, and the reference point location, wherein the initial propagation track passes through the transmission point location, the reception point location, and the reference point location.

7. A beam transmitting apparatus, wherein the apparatus comprises a control module and a phase modulation module;

the control module is configured to: obtain a target propagation track and a reception point location of a beam, wherein the target propagation track passes through a transmission point location of the beam and the reception point location of the beam; and determine target phase information of the beam based on the target propagation track and the reception point location, so that a depth of focus location of the beam overlaps the reception point location; and

the control module is further configured to control the phase modulation module to transmit the beam based on the target phase information.

8. The apparatus according to claim 7, wherein the determining target phase information of the beam based on the target propagation track and the reception point location comprises:

determining initial phase information of the beam based on the target propagation track;

determining a phase offset of the beam based on the reception point location and the target propagation track; and

obtaining the target phase information of the beam through calculation based on the initial phase information and the phase offset.

9. The apparatus according to claim 7 or 8, wherein the beam is a non-diffractive beam, the apparatus further comprises a beam steering module, and the control module is further configured to:

determine an emergence angle of an electromagnetic wave based on the target propagation track; and

control the beam steering module to transmit the electromagnetic wave at the emergence angle; and

in the aspect of controlling the phase modulation module to transmit the beam based on the target phase information, the control module is specifically configured to:

control the beam modulation module to modulate a phase of the electromagnetic wave based on the target phase information, so that the electromagnetic wave is converted into a non-diffractive beam, wherein a difference between a depth of focus location of the non-diffractive beam and the reception point location falls within a first preset range.

10. The apparatus according to any one of claims 7 to 9, wherein the obtaining a target propagation track of a beam comprises:

obtaining an obstacle location; and

determining the target propagation track based on the transmission point location, the reception point location, and the obstacle location, wherein the target propagation track passes through the transmission point location and the reception point location, and the target propagation track does not pass through the obstacle location.

11. The apparatus according to any one of claims 7 to 10, wherein the obtaining a target propagation track of a beam comprises:

determining an initial propagation track, passing through the transmission point location and the reception point location, of the beam based on the transmission point location and the reception point location;

obtaining initial feedback information transmitted by a beam receiving apparatus, wherein the initial feedback information indicates strength information of an initial beam received at the reception point location, and the initial beam is propagated along the initial propagation track; and

when a difference between the strength information of the initial beam received at the reception point location and strength information of an initial beam transmitted at the transmission point location is greater than a preset threshold, adjusting the initial propagation track to obtain the target propagation track.

12. The apparatus according to claim 10 or 11, wherein the determining an initial propagation track, passing through the transmission point location and the reception point location, of the beam based on the transmission point location and the reception point location comprises:

determining a reference point location based on the transmission point location and the reception point location, wherein a distance between the reference point location and the transmission point location is a first distance, a distance between the reference point location and the reception point location is a second distance, and a difference between the first distance and the second distance falls within a preset range; and

determining the initial propagation track based on the transmission point location, the reception point location, and the reference point location, wherein the initial propagation track passes through the transmission point location, the reception point location, and the reference point location.

13. A communication apparatus, wherein the communication apparatus comprises a processor, a transceiver, a memory, and computer-executable instructions that are stored in the memory and that can be run on the processor, and when the computer-executable instructions are run, the communication apparatus is enabled to perform the method according to any one of claims 1 to 6.

14. A computer-readable storage medium, wherein the computer-readable storage medium stores computer instructions, and when the computer instructions are run on a communication apparatus, the communication apparatus is enabled to perform the method according to any one of claims 1 to 6.

15. A computer program product, wherein the computer program product comprises a computer program, and when the computer program is run, the method according to any one of claims 1 to 6 is performed.

FIG. 1A

FIG. 1B

Obtain a target propagation track of a beam and a reception point location of the beam, where the target propagation track passes through a transmission point location and the reception point location of the beam    201

Determine target phase information of the beam based on the target propagation track and the reception point location, so that a depth of focus location of the beam overlaps the reception point location    202

Control to transmit the beam based on the target phase information    203

FIG. 2A

x

Depth of focus, or transmission point location

Reception point location    z

Target propagation track

(a)

x

Depth of focus, or transmission point location

z

Target propagation track

Reception point location

(b)

FIG. 2B

P=P1+P2

Gaussian beam

P1

Phase profile

x

Fourier lens

P2, A1    Airy beam    P3, A2

z

FIG. 2C

$$s = x/x_0$$
$$\xi = z/kx_0^2$$

Spatial coordinate transformation

$\varphi(x, z)$

$\varphi(s, \xi)$

FIG. 2D

$\upsilon_1 = 0$

Depth of focus

Target propagation track

(a)

$\upsilon_2 < 0$

Target propagation track

Depth of focus

(b)

FIG. 2E

FIG. 2F

Determine a first transmitted wave function of a beam based on a first amplitude and first phase information of the beam at a transmission point location — 210

Obtain second phase information through calculation based on the first transmitted wave function and a target propagation track — 220

Determine a first received wave function based on the second phase information and a second amplitude, where the second amplitude is obtained after the beam reaches a reception point location along the target propagation track — 230

Obtain third phase information through calculation based on the first received wave function and the target propagation track — 240

Determine a second transmitted wave function of the beam based on the first amplitude and the third phase information — 250

Use the third phase information as the first phase information

Whether a difference between the first transmitted wave function and the second transmitted wave function falls within a first preset range

No

Yes

Determine the third phase information as target phase information — 260

FIG. 2G

First amplitude, and
first phase
information

|

↓

| First transmitted wave function |  +  Target propagation track  Obtain through calculation  | Second phase information |  +  Second amplitude (measurement)

- - - - - - - - - - - - - - - →

| First received wave function |  +  Reverse target propagation track

Obtain through calculation

↓

| Third phase information |  +  First amplitude

↓

| Second transmitted wave function |

FIG. 2H

Intelligent reflecting
surface

Tx

Obstacle

Control

Rx

FIG. 3A

| | 301 |
|---|---|
| Obtain an obstacle location | |

| | 302 |
|---|---|
| Determine a target propagation track based on a transmission point location, a reception point location, and the obstacle location, where the target propagation track passes through the transmission point location and the reception point location, and the target propagation track does not pass through the obstacle location | |

FIG. 3B

FIG. 3C

FIG. 3D

FIG. 3E

| | |
|---|---|
| Determine an initial propagation track, passing through a transmission point location and a reception point location, of a beam based on the transmission point location and the reception point location | 401 |
| Obtain initial feedback information transmitted by a beam receiving apparatus, where the initial feedback information indicates strength information of an initial beam received at the reception point location, and the initial beam is propagated along the initial propagation track | 402 |
| When a difference between the strength information of the initial beam received at the reception point location and strength information of an initial beam transmitted at the transmission point location is greater than a preset threshold, adjust the initial propagation track to obtain a target propagation track | 403 |

FIG. 4A

FIG. 4B

FIG. 5

FIG. 6

701

| Feedback channel | → | Control module |

702

| Transmission source | → | Beam steering module | 703 | → | Phase modulation module |

FIG. 7

900

| Memory |
113 (memory 3)

111

| Processor |
113 (memory 2)
| Memory |

112
| Transceiver |

| Memory |
113 (memory 1)

FIG. 8

## INTERNATIONAL SEARCH REPORT

| International application No. |
|---|
| **PCT/CN2022/071860** |

**A. CLASSIFICATION OF SUBJECT MATTER**

H04W 4/02(2018.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, CNKI, WPI, EPODOC: 电磁波, 波束, 目标传播轨迹, 位置, 相位, 焦深, 聚焦, 重合, 发射, 无衍射, 距离, electromagnetic wave, beam, target propagation trajectory, position, phase, depth of focus, focused, coincident, transmit, non-diffracting, distance

**C. DOCUMENTS CONSIDERED TO BE RELEVANT**

| Category* | Citation of document, with indication, where appropriate, of the relevant passages | Relevant to claim No. |
|---|---|---|
| A | CN 110729821 A (XIDIAN UNIVERSITY et al.) 24 January 2020 (2020-01-24) claims 1-5, and description, paragraphs [0030]-[0052] | 1-15 |
| A | CN 112711018 A (INSTITUTE OF ENGINEERING PROTECTION, RESEARCH INSTITUTE FOR NATIONAL DEFENSE ENGINEERING OF ACADEMY OF MILITARY SCIENCE OF PLA) 27 April 2021 (2021-04-27) entire document | 1-15 |
| A | CN 112104972 A (SONY CORP.) 18 December 2020 (2020-12-18) entire document | 1-15 |
| A | CN 113162712 A (BEIJING JIAOTONG UNIVERSITY) 23 July 2021 (2021-07-23) entire document | 1-15 |
| A | US 2020124710 A1 (ROBERT BOSCH GMBH) 23 April 2020 (2020-04-23) entire document | 1-15 |
| A | CN 113595608 A (TSINGHUA UNIVERSITY) 02 November 2021 (2021-11-02) entire document | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 September 2022** | **28 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/071860**

| Patent document cited in search report | | | Publication date (day/month/year) | Patent family member(s) | | | Publication date (day/month/year) |
|---|---|---|---|---|---|---|---|
| CN | 110729821 | A | 24 January 2020 | None | | | |
| CN | 112711018 | A | 27 April 2021 | None | | | |
| CN | 112104972 | A | 18 December 2020 | WO | 2020238829 | A1 | 03 December 2020 |
| | | | | CN | 113853807 | A | 28 December 2021 |
| | | | | US | 2022201430 | A1 | 23 June 2022 |
| CN | 113162712 | A | 23 July 2021 | None | | | |
| US | 2020124710 | A1 | 23 April 2020 | DE | 102018217731 | A1 | 23 April 2020 |
| | | | | CN | 111060890 | A | 24 April 2020 |
| CN | 113595608 | A | 02 November 2021 | CN | 215835399 | U | 15 February 2022 |

Form PCT/ISA/210 (patent family annex) (January 2015)